# EUROPEAN PATENT SPECIFICATION

(11) **EP 3 141 099 B1**
(45) Date of publication and mention of the grant of the patent: **16.05.2018**
(21) Application number: 16187473.0
(22) Date of filing: 06.09.2016
(51) Int. Cl.: A01D 34/73

(54) **BI-LEVEL BLADE**
ZWEISTUFIGE KLINGE
LAME À DEUX NIVEAUX

(30) Priority: 11.09.2015 IT UB20153560
(43) Date of publication of application: 15.03.2017
(73) Proprietor: Stiga S.p.A. in breve anche St. S.p.A., 31033 Castelfranco Veneto (TV) (IT)
(72) Inventor: ZONTA, Paolo, 31033 CASTELFRANCO VENETO (TV) (IT)
(74) Representative: Mittler, Andrea

(56) References cited:
- DE-U1- 29 715 565
- US-A- 3 780 509
- US-A- 5 199 251

## Description

The present invention relates to a bi-level blade of a lawnmower.

Other bi-level blades are described in the prior art. For example, US-5259176-A describes a bi-level blade of a lawnmower consisting of an upper blade overlapping a lower blade in two separate parts. A central portion of the upper blade is flat and overlaps and is completely in contact and integrally associated with a central portion of the lower blade. The central portions of the two blades lie on the same horizontal geometric plane. The center of the two central portions is keyed onto a vertical motor axis which identifies a rotation direction of the bi-level blade, said rotation direction of the blade lies on the horizontal geometric plane. The bi-level blade extends the longitudinal length of the two blades from the center of the central portions extending outwardly along a longitudinal axis. Said longitudinal axis is perpendicular to the rotation direction and lies on the horizontal geometric plane. The upper blade comprises an outward portion with an upper cutting edge facing the front of the rotation direction of the blade. Said upper cutting edge is adapted to cut an upper portion of a blade of grass. Said upper cutting edge of the outward portion of the upper blade disadvantageously has a very reduced longitudinal length. The lower blade comprises an outward portion with a cutting edge also facing the front of the rotation direction of the blade, but set back by a transverse distance along a transversal axis to the rotation direction. The lower cutting edge of the outward portion of the lower blade is arranged on a lower horizontal geometric plane which is lowered by a vertical distance with respect to the upper cutting edge. The lower cutting edge is adapted to cut a lower portion of the blade of grass. Said vertical distance allows an air flow to pass between the outward portion of the upper blade and the outward portion of the lower blade. The lower outward portion comprises a rear outward portion facing the rear of the rotation direction. Said rear outward portion of the lower blade is bent upwards in vertical direction and towards the rear of the rotation direction so as to be adapted to direct the entire air flow from the front of the rotation direction. An outward end of the rear outward portion of the lower blade is raised by a second vertical distance up to being vertically higher with respect to the horizontal geometric plane. The upper blade outward portion comprises a rear outward portion facing the rear of the rotation direction, which reduces the transverse length of the upper blade by a transverse distance adapted to allow the circulation of the air flow. Disadvantageously, the entire air flow from the front of the rotation direction and which passes from the vertical distance between the upper cutting edge and the lower cutting edge, is directed upwards passing through the transverse distance created by the rear outward portion of the upper blade.

The small dimensions of the upper cutting edge of the blade compromise the mulching of the cut grass and the lawn requires cleaning by collecting the grass not mulched, thus compromising the mulching function.

Disadvantageously, said bi-level blade has static balancing problems. Disadvantageously, the two blades in separate pieces amplify the static unbalancing thus triggering vibrations and resonances during cutting.

Another bi-level blade is described in EP-1498018-B1, where an upper cutting edge of an upper blade is raised by a first vertical distance from a horizontal geometric plane of the central portions overlapping the blades and a lower cutting edge of a lower blade is lowered by a second vertical distance. A rear portion of an end portion of the lower blade does not cover the entire vertical distance between the upper cutting edge and the lower cutting edge, and the space remaining is such as to allow a portion of an air flow to pass through on a horizontal geometric plane. Disadvantageously, the bi-level blade has stability and static balancing problems. Disadvantageously, the mulching operation is compromised and the lawn requires cleaning of the grass not completely mulched. Disadvantageously, fixing tabs between the upper blade and the lower blade limit the transverse length of the cutting edges. Disadvantageously, said tabs destabilize the static balancing of the blade.

US-3780509 describes a bi-level blade comprising an upper blade and a lower blade separated vertically by a vertical distance and transversely by a transverse distance, as in the examples above. In addition, the lower blade is longer with respect to the upper blade by a longitudinal distance along a longitudinal axis. The lower blade comprises lower cutting edges in axis with the longitudinal axis, which disadvantageously reduce the cutting surface of the blade, as with the blades of the state of the art already analyzed. The mulching of the cut grass disadvantageously is compromised, given the reduced sizes of the upper cutting edge.

It is the object of the present invention to provide a more solid and resistant bi-level blade, which is easy to be mounted with a cutting plate of a lawnmower, may finely mulch the cut grass for a mulching function, may cut the grass more efficiently on two cutting levels, allows an increased air flow to be created inside the cutting plate, increases a cutting surface, is statically balanced, better responds to stresses, reduces vibrations and resonances, has a lighter blade, has reduced inertia, reduces noise, allows the cutting energy to be reduced and the cut grass to be mulched and the impact energy to be better absorbed during cutting.

According to the invention, such an object is achieved by a bi-level blade of a lawnmower according to claim 1.

These and other features of the present invention will become more apparent from the following detailed description of a practical embodiment thereof, shown by way of non-limitative example in the accompanying drawings, in which:
Figure 1 shows a top view of a bi-level blade of a lawnmower;
Figure 2 shows an enlargement A of Figure 1;
Figure 3 shows a sectional view according to line III-III in Figure 2;
Figure 4 shows a front view of the bi-level blade;
Figure 5 shows an enlargement B of Figure 4;
Figure 6 shows a side view of the bi-level blade;
Figure 7 shows a bottom view of the bi-level blade;
Figure 8 shows a side view of a hub adapted to mount said bi-level blade with a cutting plate of the lawnmower;
Figure 9 shows a top view of the hub;
Figure 10 shows a bottom view of the hub;
Figure 11 shows a top view of the bi-level blade mounting the hub;
Figure 12 shows a bottom view of the bi-level blade mounting the hub according to a portion of view C in Figure 11;
Figure 13 shows a side view of the bi-level blade mounting the hub according to the portion of view C in Figure 11;
Figure 14 shows a sectional view according to line XIV-XIV in Figure 11;
Figure 15 shows a top view of the bi-level blade comprising an alternative opening for the hub;
Figure 16 shows an enlargement A of Figure 1, with an alternative bi-level blade.

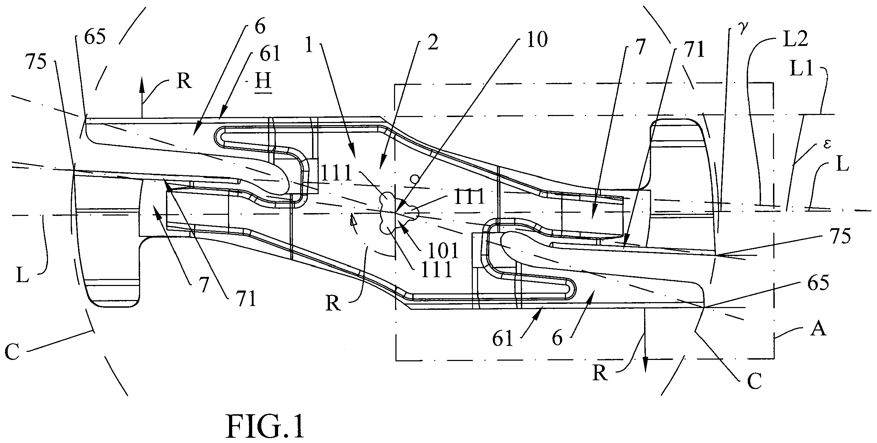

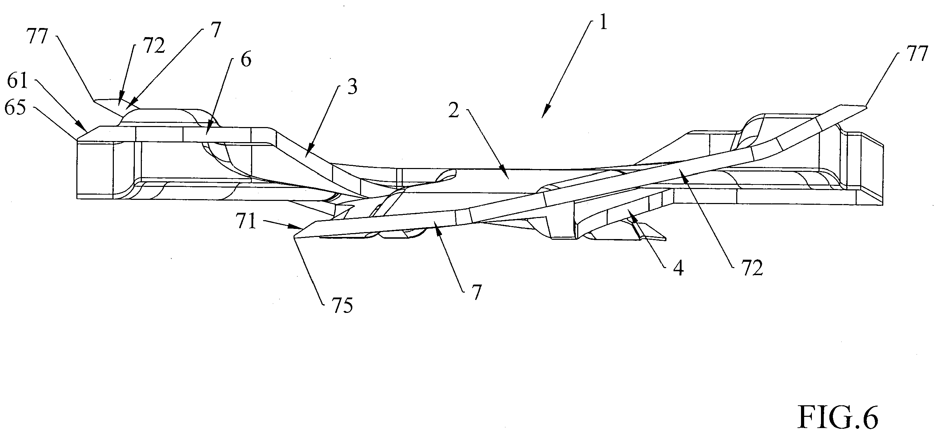

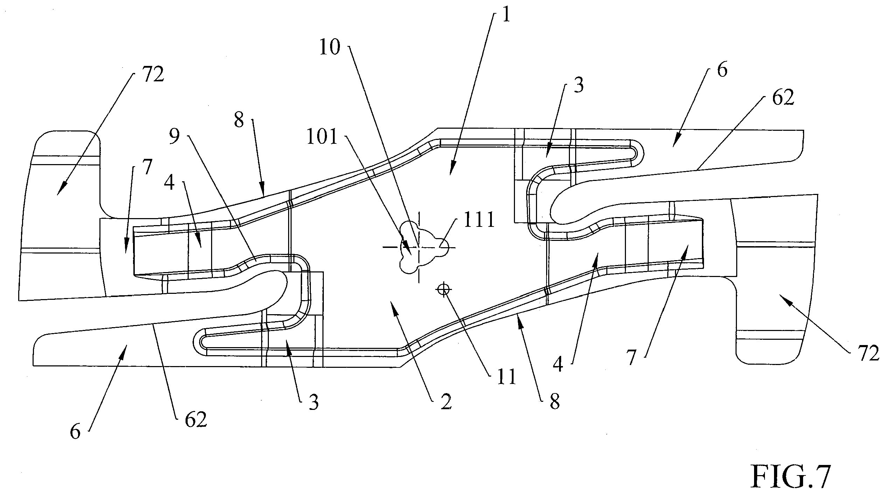

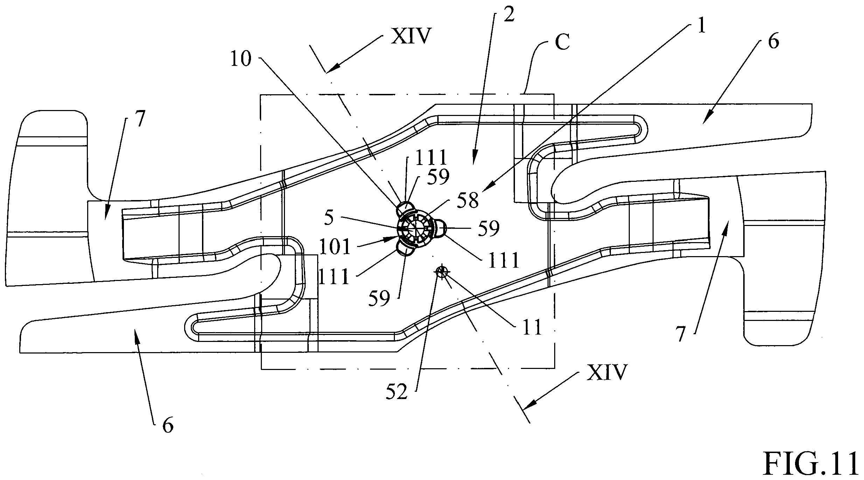

With reference to the figures listed above, it is noted a bi-level blade 1 of a lawnmower (not shown in the figures). Said bi-level blade 1 comprises a central portion 2 lying on a first horizontal geometric plane H. A center 10 of the central portion 2 is keyed onto a vertical motor axis M which identifies a rotation direction R of the bi-level blade 1. Said rotation direction R lies on said first horizontal geometric plane H. Said bi-level blade 1 extends a longitudinal length from center 10 of the central portion 2 extending outwardly along a longitudinal axis L. Said longitudinal axis L is perpendicular to the rotation direction R and lies on the first horizontal geometric plane H. An upper outward portion 6 and a lower outward portion 7 of the bi-level blade 1 extend from the central portion 2 towards both outward directions along the longitudinal axis L. The bi-level blade 1 has a central symmetry between a left-hand part and a right-hand part, as seen in Figures 1, 4, 6, 7, 11, 15.

Said upper outward portion 6 comprises an upper cutting edge 61 facing a front of the rotation direction R. Said upper cutting edge 61 comprises an outward end 65. At least said outward end 65 lies on an upper horizontal geometric plane S which is higher by a first vertical distance 301 with respect to said first horizontal geometric plane H. Said first vertical distance 301 is measured along a vertical axis V which is parallel to the vertical motor axis M, said upper cutting edge 61 is adapted to cut an upper portion of a blade of grass.

The entire upper outward portion 6 lies on the same upper horizontal geometric plane S.

Said lower outward portion 7 comprises a lower cutting edge 71 facing the front of the rotation direction R, said lower cutting edge 71 comprises an outward end 75. At least said outward end 75 lies on an lower horizontal geometric plane J which is lower by a second vertical distance 302 with respect to said first horizontal geometric plane H, said second vertical distance 302 is measured along the vertical axis V.

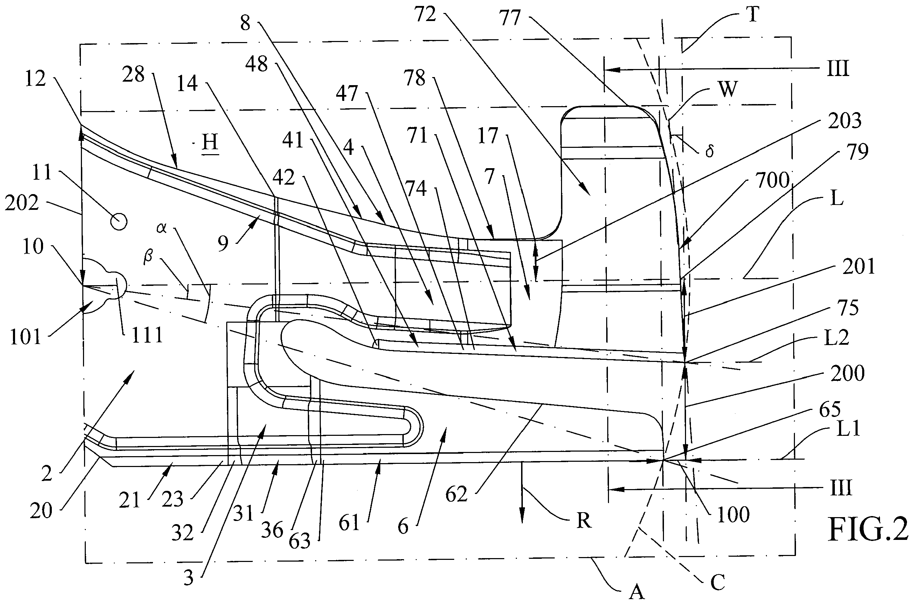

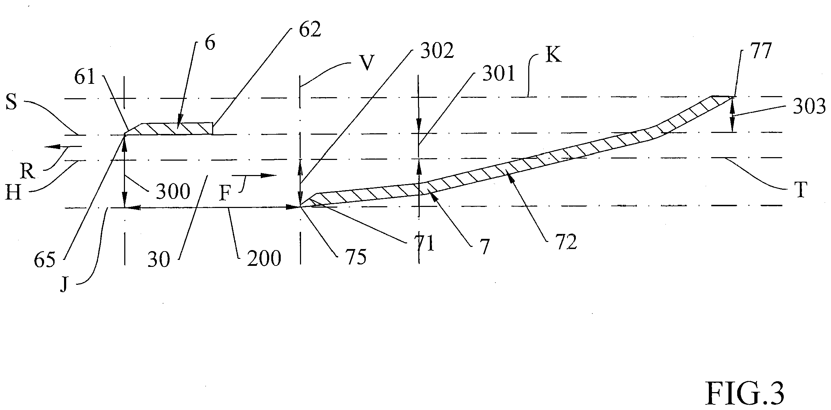

Said lower cutting edge 71 is adapted to cut a lower portion of a blade of grass. As shown in particular in Figures 2 and 3, said lower cutting edge 71 is set back by a transverse distance 200 with respect to said upper cutting edge 61, where said transverse distance 200 is measured along a transversal axis T, said transversal axis T is lying on the first horizontal geometric plane H and is perpendicular to the longitudinal axis L.

The entire lower outward portion 7 lies on the same lower horizontal geometric plane J.

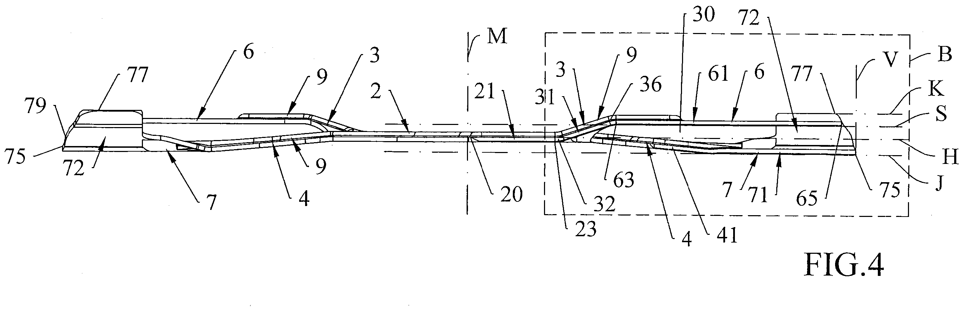

As shown in particular in Figure 3, a vertical separation distance 300 between the outward end 65 of the upper cutting edge 61 and the outward end 75 of the lower cutting edge 71 is the sum of the first vertical distance 301 and of the second vertical distance 302, said vertical separation distance 300 identifies an opening 30 between the upper outward portion 6 and the lower outward portion 7. As shown in particular in Figures 3 and 4, said opening 30 is adapted to allow an air flow F from the front of the rotation direction R, to pass through.

Said vertical separation distance 300 between the outward end 65 of the upper cutting edge 61 and the outward end 75 of the lower cutting edge 71 is from 13 to 30 mm. Said vertical separation distance 300 advantageously allows to increase the air flow F from the front of the rotation direction R, thus advantageously allowing the cut grass to be kept circulating inside a cutting plate where the bi-level blade 1 is mounted so as to mulch the cut grass much better. The vertical separation distance 300 advantageously allows taller grass to be cut and any type of grass to be cut more effectively, moreover it contributes to reducing the total energy required for cutting the grass.

Said lower outward portion 7 comprises a rear outward portion 72 facing the rear of the rotation direction R in direction of the transversal axis T, said rear outward portion 72 is bent upwards in direction of the vertical axis V so as to be adapted to direct a part of the air flow F upwards in direction of the vertical axis V, an upper end 77 of the rear outward portion 72 is elevated by a third vertical distance 303 above the upper horizontal geometric plane S.

The rear outward portion 72 does not cover the entire opening 30 between the upper outward portion 6 and the lower outward portion 7, thus advantageously allowing the air flow to also pass through horizontally, allowing the cut grass to remain in the air for longer inside the cutting plate, thus allowing the bi-level blade 1 to better mulch the cut grass.

Said upper outward portion 6 comprises a rear outward portion 62 facing the rear of the rotation direction R in direction of the transversal axis T, said rear outward portion 62 reduces a transverse length of the upper outward portion 6.

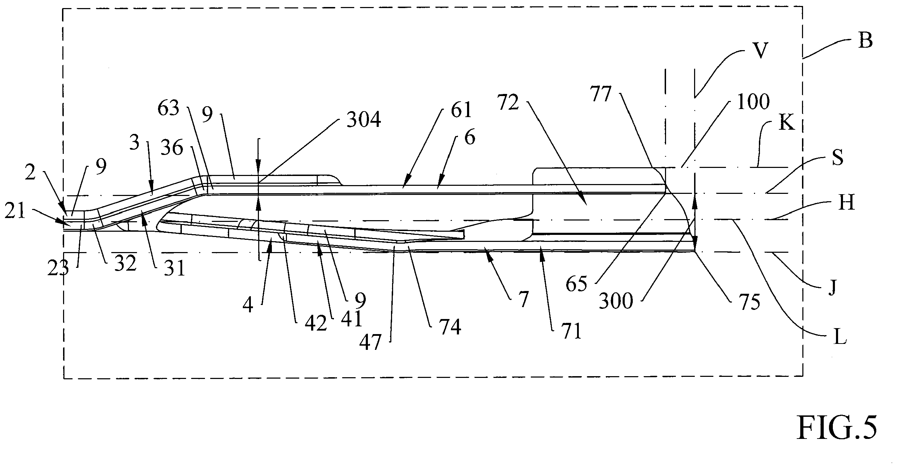

As shown in particular in Figures 2 and 5, said upper outward portion 6 is advantageously shorter with respect to said lower outward portion 7, by a longitudinal length 100. Said longitudinal length 100 is measured along the longitudinal axis L between said outward end 65 of the upper cutting edge 61 and said outward end 75 of the lower cutting edge 71.

The longitudinal length 100 is selected so that said outward end 65 of the upper cutting edge 61 is advantageously on the same cutting circumference C as said outward end 75 of the lower cutting edge 71. Said cutting circumference C has a geometric ray equal to the distance between center 10 of the central portion 2 and the outward ends 65 and 75, as shown in particular in Figures 1 and 2. The longitudinal length 100 is selected so as to advantageously allow the blade to be made even more stable and the air flow to be made more stable.

A first axis between center 10 of the central portion 2 and the outward end 65 of the upper cutting edge 61 is inclined by a first angle α with respect to the longitudinal axis L so that the upper cutting edge 61 is off axis with respect to the longitudinal axis L.

A second axis between center 10 of the central portion 2 and the outward end 75 of the lower cutting edge 71 is inclined by a second angle β with respect to the longitudinal axis L so that the lower cutting edge 71 is off axis with respect to the longitudinal axis L.

The first angle α is from 5 to 60 sexagesimal degrees and the second angle β is from 1 to 50 sexagesimal degrees measured on the horizontal geometric plane (H), so that said outward end 75 of the lower cutting edge 71 of the lower outward portion 7 extends by a second transverse length 201 from the longitudinal axis L towards the front of the rotation direction R in direction of the transversal axis T, thus advantageously allowing the bi-level blade 1 to be made more stable. By moving said outward end 75 of the lower cutting edge 71 towards the front, said first angle α and said second angle β advantageously allow the surface exposed to the front of the rotation direction R to be increased, thus contributing to increasing the cutting surface.

Said bi-level blade 1 is advantageously a single piece so as to make blade 1 more solid and resistant, allow easy and quick mounting with the cutting plate of the lawnmower so that it is increasingly balanced, which better responds to stresses, reduces vibrations and resonances, so that blade 1 is more lightweight, with reduced inertia, which allows the cutting energy to be reduced and the cut grass to be mulched even better. Moreover, this allows a better compacting of the mulched grass in a cutting bag to be achieved.

Said upper cutting edge 61 of the upper outward portion 6 extends along the longitudinal axis L in direction inward to the bi-level blade 1 over the entire longitudinal length of the upper outward portion 6.

Said central portion 2 comprises a central cutting edge 21 facing the front of the rotation direction R, said central cutting edge 21 comprises an inward end 20 and an outward end 23 lying on the first horizontal geometric plane H, said inward end 20 of the central cutting edge 21 is located on the front of center 10 of the central portion 2.

A frontal median portion 3 of the bi-level blade 1 which links together the central portion 2 and the upper outward portion 6, comprises an upper median cutting edge 31 facing the front of the rotation direction R, said upper median cutting edge 31 comprises an inward end 32 and an outward end 36, said inward end 32 is in contact with said outward end 23 of the central cutting edge 21, said inward end 32 of the upper median cutting edge 31 lies on the horizontal geometric plane H, said outward end 36 of the upper median cutting edge 31 is in contact with an inward end 63 of the upper cutting edge 61.

The significant increase in the cutting surface 61, 31, 21 advantageously contributes to both cutting the grass better and to mulching more finely the cut grass inside the cutting plate where blade 1 rotates.

Said lower cutting edge 71 of the lower outward portion 7 extends along the longitudinal axis L in direction inward to the bi-level blade 1 over the entire longitudinal length of the lower outward portion 7.

A rear median portion 4 of the bi-level blade 1 which links together the central portion 2 and the lower outward portion 7, comprises a lower median cutting edge 41 facing the front of the rotation direction R, said lower median cutting edge 41 comprises an inward end 42 and an outward end 47, said outward end 47 of the lower median cutting edge 41 is in contact with an inward end 74 of the lower cutting edge 71.

The even more significant increase in the cutting surface 61, 31, 21, 71, 41 advantageously contributes to both cutting the grass better and to mulching more finely the cut grass inside the cutting plate where blade 1 rotates.

Said central cutting edge 21, said median cutting edge 41 and said upper cutting edge 61 are along a first frontal axis L1. Said central cutting edge 21, said median cutting edge 41 and said cutting edge 61 advantageously allow the upper cutting surface to be increased, thus cutting the grass more effectively, balancing and stabilizing the bi-level blade 1 even better, creating a more stable and laminar air flow which enters opening 30, thus allowing the cut grass in the air to be kept inside the cutting plate to mulch it better and more finely, while reducing the noise, vibrations and resonances, thus allowing the cutting energy to be reduced.

Said upper cutting edge 61 is inclined by a fifth angle ε with respect to the longitudinal axis L, said fifth angle ε is from -40 to 20 sexagesimal degrees measured on the horizontal geometric plane H. Said fifth angle s allows to ensure that the upper cutting edge 61 may cut the grass better, thus saving cutting energy. Said upper cutting edge 61 identifies the first frontal axis L1.

Said lower cutting edge 71 is inclined by a third angle γ with respect to the longitudinal axis L, said third angle γ is from -40 to 20 sexagesimal degrees measured on the horizontal geometric plane H. Said third angle γ allows to ensure that the lower cutting edge 71 may cut the grass better, thus better absorbing the energy by better absorbing the impact energy with stones, branches or different residuals other than grass. Said lower cutting edge 71 identifies a second frontal axis L2.

Said central portion 2 is flat and entirely lies on the horizontal geometric plane H, said upper outward portion 6 entirely lies over the entire longitudinal length on the upper horizontal geometric plane S and said lower outward portion 7 entirely lies over the entire longitudinal length on the lower horizontal geometric plane J.

Said central portion 2 comprises a central rear edge 28 facing the rear of the rotation direction R.

Said central rear edge 28 comprises an inward end 12 and an outward end 14, said inward end 12 of the central rear edge 28 is located on the rear of center 10 of the central portion 2, said outward end 14 of the central rear edge 28 is in contact with a median rear edge 48 of the rear median portion 4 which in turn is in contact with an outward rear edge 78 of the lower outward portion 7, said outward rear edge 78 comprises a rear outward end 17 which is in contact with said rear outward portion 72 of said lower outward portion 7.

Said central rear edge 28, said median rear edge 48 and said outward rear edge 78 identify a rear edge 8 of the bi-level blade 1, said rear edge 8 is bent from the rear towards the front in direction along the transversal axis T and from inward outwardly along the direction of the longitudinal axis L so that a second transverse distance 202 measured on the transversal axis T between center 10 of the central portion 2 and the inward end 12 of the central rear edge 28 is longer than a third transverse distance 203 measured on the transversal axis T between the longitudinal axis L and the rear outward end 17 of the outward rear edge 78.

The shape of the rear edge 8 advantageously allows the bi-level blade 1 to be made more stable by strengthening the structure of blade 1, thus making it more solid and resistant, responding to stresses even better, reducing vibrations and resonances and allowing knocks due to impact with stones, branches and different residuals other than grass, to be absorbed even better.

Said rear outward portion 72 of said lower outward portion 7 comprises an outward edge 700 facing outwardly, said outward edge 700 goes from the upper end 77 to the outward end 75 of the rear outward portion 72 and comprises at least one point 79 the geometric intersection of which is projected on the longitudinal axis L, an edge axis W is identified between the outward end 75 and point 79 of the outward edge 700, which edge axis follows a profile of the outward edge 700, said edge axis W is inclined with respect to the transversal axis T of a fourth angle δ, said fourth angle δ is from -10 to +10 sexagesimal degrees measured on the horizontal geometric plane H. Figure 2 shows an outward edge 700, between point 79 and the outward end 75, which outward edge is arranged along the edge axis W which is inclined by said fourth angle δ which is from -10 to 0 sexagesimal degrees. Said shape of the outward edge 700 allows the air flow passing through opening 30 to be withheld inside the volute, thus allowing the cut grass inside the cutting plate to be kept in the air for a longer time so that the cut grass is mulched even better and more finely to improve a mulching function.

Said bi-level blade 1 comprises ribs 9 which increase a thickness 304 of the bi-level blade 1.

Said thickness 304 is measured along the vertical axis V.

Said ribs 9 increase thickness 304 by at least one of a portion of a list comprising the frontal median portion 3, the rear median portion 4, at least one portion facing inwardly to the upper outward portion 6 and at least one portion facing inwards to the lower outward portion 7.

Said ribs 9 advantageously allow the solidity and resistance of the bi-level blade 1 to be increased, thus reducing the inertia thereof, allowing it to better absorb the impact energy during cutting and to reduce vibrations and resonances.

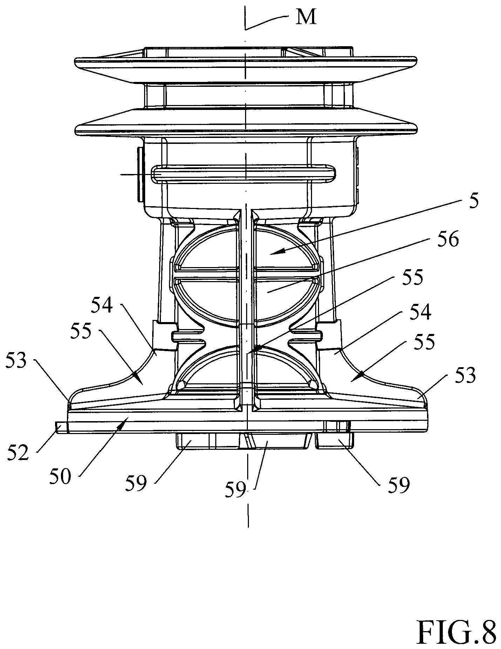

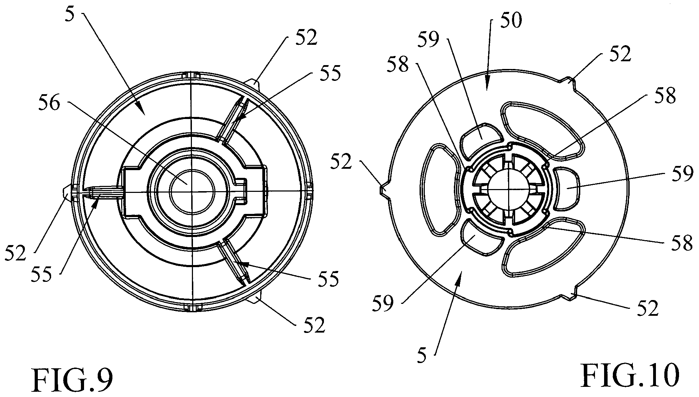

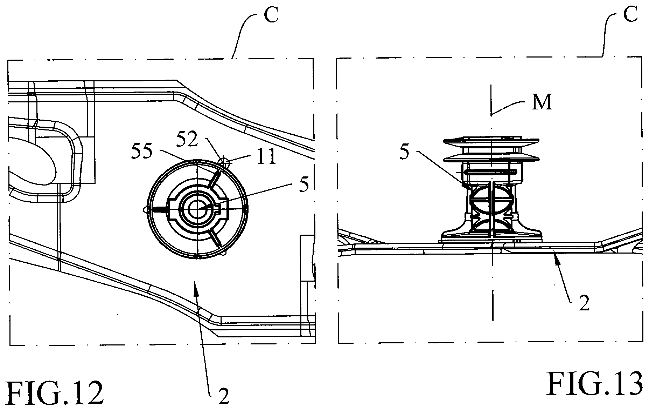

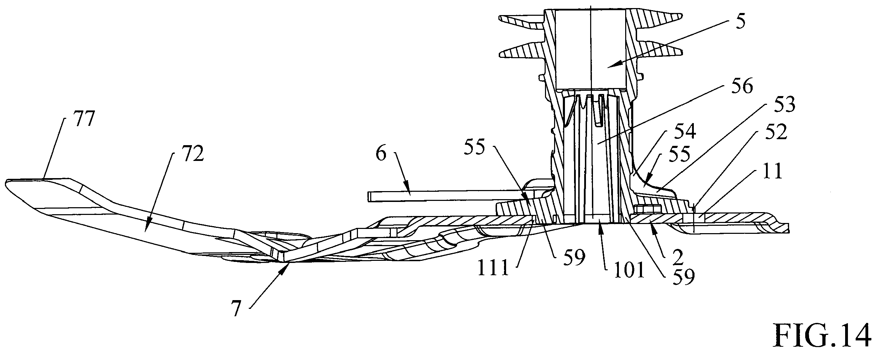

As shown in particular in Figures 8 to 14, the central portion 2 comprises a central hole 101 at center 10 and at least a second through hole 11, said central hole 101 being adapted to be engaged by at least three lower extensions 59 of a hub 5, said at least a second through hole 11 being adapted to see through from below a tooth 52 of hub 5, said hub 5 mounting said bi-level blade 1 along the motor axis M with the lawnmower.

Hub 5 also comprises at least three other lower extensions 58 for better centering the hub 5 with blade 1 so as to ensure a better static balancing during grass cutting.

Said lower extensions 59 transfer the rotation movement between a motor and blade 1 and also strengthen the blade 1-hub 5 link, thus allowing the resistance to impact to be significantly increased during cutting and the impact to cutting to be better absorbed so that a drive shaft is not subjected to damage, thus leaving integral the remaining structure of hub 5. The second through hole 11 is advantageously useful to verify whether or not the tooth 52 of hub 5 may be seen. Should the impact with objects, stones, branches break one of the lower extensions 59 of hub 5, tooth 52 would no longer be aligned with the second through hole 11, thus advantageously allowing to ensure whether or not the bi-level blade 1 is properly linked with hub 5.

Said hub 5 comprises at least three counterfort 55 located at 120° between one another, each counterfort 55 comprising a base portion 53 in contact with a basis 50 of hub 5 and an axial portion 54 in contact with a shaft 56 of hub 5, said teeth 52 are arranged at said counterfort 55. Said counterfort 55 advantageously allows hub 5 to be strengthened, thus increasing the resistance to knocks during cutting and keeping the bi-level blade 1 more solidly linked.

As shown in Figures 1, 2, 7, 11, 14, 16, said central hole 101 comprises at least three grooves 111 adapted to be engaged by said at least three lower extensions 59 of said hub 5. Said grooves 111 allow the lower extensions 59 of hub 5 to be engaged in a more solid and resistant manner, thus allowing the resistance to knocks to be reinforced during the cutting of the bi-level blade 1.

With regard to the operation of the bi-level blade 1, it is mounted with hub 5 to the cutting blade of the lawnmower, thus rotating about the vertical motor axis M in the direction of the rotation axis.

Alternatively, the entire upper outward portion 6 will not to lie on the same upper horizontal geometric plane S, but only a part will do so, that is at least the outward end 65.

Alternatively again, the entire lower outward portion 7 will not to lie on the same lower horizontal geometric plane J, but only a part will do so, that is at least the outward end 75.

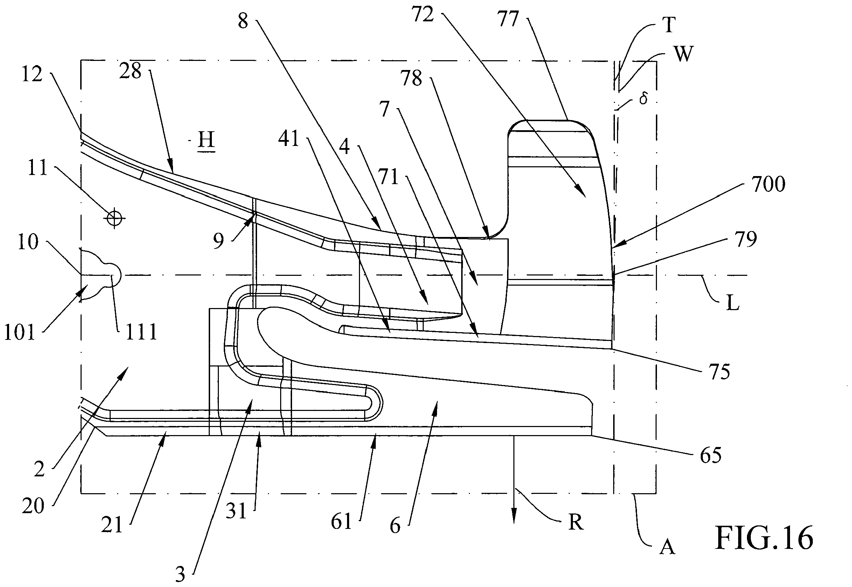

A further alternative in Figure 16 shows the outward edge 700, between point 79 and the outward end 75, which is along the edge axis W which is inclined with respect to the transversal axis by said fourth angle δ which is from 0 to +10 sexagesimal degrees.

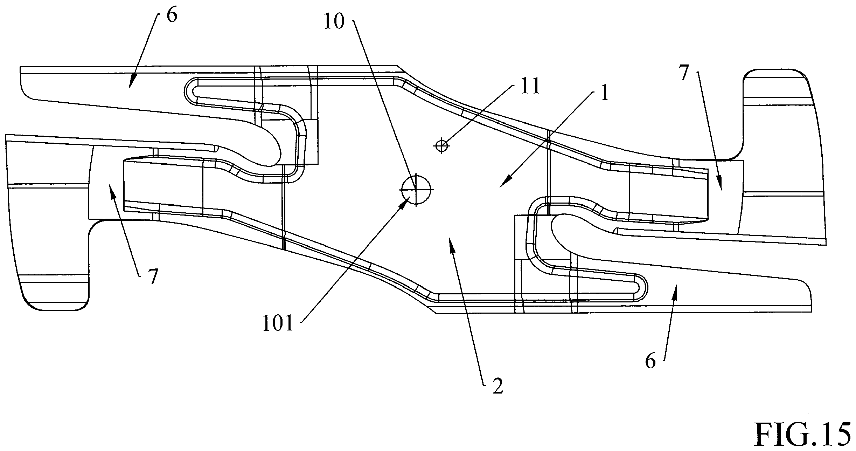

Alternatively, the central hole 101 may be provided to be circular, as shown in Figure 15.

Alternatively, only said upper cutting edge 61 lies on the first frontal axis L1, while said central cutting edge 21 and said median cutting edge 41 are separated therefrom.

Advantageously, said bi-level blade 1 is more solid and resistant, easy to be mounted with the cutting blade of a lawnmower, mulches the cut grass more finely for the mulching function, cuts the grass more effectively on two cutting heights, creates an increased and more stable air flow inside the cutting plate to increase the time in the air of the cut grass inside the cutting plate, thus allowing said cut grass to be even better mulched, increases the cutting surface by means of the cutting edges 21, 31, 41, 61, 71, is statically balanced, responds better to stresses, reduces vibrations and resonances, has a smaller weight being a single piece reinforced by a particular shape and by the ribs, has reduced inertia, reduces noise, reduces the cutting energy and better absorbs the impact energy during cutting. Moreover, due to the mechanical optimization of the cutting action, it allows the total energy required for cutting the grass to be reduced while maximizing the mass of grass collected in the bag, since due to the mulching it allows a more advantageous compacting of the grass bag to be obtained in the collection bag.

## Claims

1. Bi-level blade (1) of a lawnmower comprises a central portion (2) lying on a first horizontal geometrical plane (H), a center (10) of the central portion (2) is keyed to a vertical motor axis (M) which identifies a direction of rotation (R) of the bi-level blade (1), said direction of rotation (R) lies on said first horizontal geometrical plane (H), said bi-level blade (1) extends a longitudinal length from the center (10) of the central portion (2) extending outwardly along a longitudinal axis (L), said longitudinal axis (L) is perpendicular to the direction of rotation (R) and lies on the first horizontal geometrical plane (H), from the central portion (2) towards both outward directions along the longitudinal axis (L) extending a upper outward portion (6) and a lower outward portion (7) of the bi-level blade (1),
said upper outward portion (6) comprises an upper cutting edge (61) facing to a front of the direction of rotation (R), said upper cutting edge (61) comprises an outward end (65), at least said outward end (65) lies on an upper horizontal geometric plane (S) which is higher by a first vertical distance (301) with respect to said first horizontal geometrical plane (H), said first vertical distance (301) is measured along a vertical axis (V) which is parallel to the vertical motor axis (M), said upper cutting edge (61) is adapted to cut an upper portion of a blade of grass,
said lower outward portion (7) comprises a lower cutting edge (71) facing to the front of the direction of rotation (R), said lower cutting edge (71) comprises an outward end (75), at least said outward end (75) lies on a lower horizontal geometric plane (J) which is lower by a second vertical distance (302) with respect to said first horizontal geometrical plane (H), said second vertical distance (302) is measured along the vertical axis (V), said lower cutting edge (71) is adapted to cut a lower portion of a blade of grass, said lower cutting edge (71) is set back by a transverse distance (200) with respect to said upper cutting edge (61), wherein said transverse distance (200) is measured along a transversal axis (T), said transversal axis (T) lying on the first horizontal geometrical plane (H) and it is perpendicular to the longitudinal axis (L),
a vertical distance of separation (300) between the outward end (65) of the upper cutting edge (61) and the outward end (75) of the lower cutting edge (71) is the sum of the first vertical distance (301) and of the second vertical distance (302), said vertical distance of separation (300) identifies an opening (30) between the upper outward portion (6) and the lower outward portion (7), said opening (30) is adapted to allow an air flow (F) coming from the front of the direction of rotation (R) to pass through,
said lower outward portion (7) comprises a rear outward portion (72) facing to the rear of the direction of rotation (R) in direction of the transversal axis (T), said rear outward portion (72) is bent upwards in direction of the vertical axis (V) so as to be adapted to direct a part of the air flow (F) upwards in direction of the vertical axis (V), an upper end (77) of the rear outward portion (72) is elevated by a third vertical distance (303) above the upper horizontal geometric plane (S),
said upper outward portion (6) comprises a rear outward portion (62) facing to the rear of the direction of rotation (R) in direction of the transversal axis (T), said rear outward portion (62) reduces a transverse length of the upper outward portion (6),
said upper outward portion (6) is shorter by a longitudinal length (100) with respect to said lower outward portion (7), said longitudinal length (100) is measured along the longitudinal axis (L) between said outward end (65) of the upper cutting edge (61) and said outward end (75) of the lower cutting edge (71),
a first axis between the center (10) of the central portion (2) and the outward end (65) of the upper cutting edge (61) is inclined by a first angle (α) with respect to the longitudinal axis (L) as that the upper cutting edge (61) is off axis with respect to the longitudinal axis (L),
a second axis between the center (10) of the central portion (2) and the outward end (75) of the lower cutting edge (71) is inclined by a second angle (β) with respect to the longitudinal axis (L) as that the lower cutting edge (71) is off axis with respect to the longitudinal axis (L),
said bi-level blade (1) is a single piece,
said outward end (75) of the lower cutting edge (71) of the lower outward portion (7) extends by a second transverse length (201) from the longitudinal axis (L) towards the front of the direction of rotation (R) in direction of the transversal axis (T),
said upper cutting edge (61) of the upper outward portion (6) extends along the longitudinal axis (L) in direction inward to the bi-level blade (1) for the entire longitudinal length of the upper outward portion (6),
said central portion (2) comprises a central cutting edge (21) facing to the front of the direction of rotation (R), said central cutting edge (21) comprises an inward end (20) and an outward end (23) lying on the first horizontal geometrical plane (H), said inward end (20) of the central cutting edge (21) is located on the front of the center (10) of the central portion (2),
a frontal median portion (3) of the bi-level blade (1) which links together the central portion (2) and the upper outward portion (6), comprises an upper median cutting edge (31) facing to the front of the direction of rotation (R), said upper median cutting edge (31) comprises an inward end (32) and an outward end (36), said inward end (32) is in contact with said outward end (23) of the central cutting edge (21), said inward end (32) of the upper median cutting edge (31) lies on the horizontal geometric plane (H), said outward end (36) of the upper median cutting edge (31) is in contact with an inward end (63) of the upper cutting edge (61).

2. Bi-level blade (1) according to the claim 1, **characterized in that** said lower cutting edge (71) of the lower outward portion (7) extends along the longitudinal axis (L) in direction inward to the bi-level blade (1) for the entire longitudinal length of the lower outward portion (7),
that a rear median portion (4) of the bi-level blade (1) which links together the central portion (2) and the lower outward portion (7), comprises a lower median cutting edge (41) facing to the front of the direction of rotation (R), said lower median cutting edge (41) comprises an inward end (42) and an outward end (47), said outward end (47) of the lower median cutting edge (41) is in contact with an inward end (74) of the lower cutting edge (71).

3. Bi-level blade (1) according to anyone of the claims 1 or 2, **characterized in that** the first angle (α) is comprised between 5 and 60 sexagesimal degrees and that the second angle (β) is comprised between 1 and 50 sexagesimal degrees measured on the horizontal geometric plane (H).

4. Bi-level blade (1) according to anyone of the claims 1-3, **characterized in that** said vertical distance of separation (300) between the outward end (65) of the upper cutting edge (61) and the outward end (75) of the lower cutting edge (71) is comprised between 13 and 30 mm.

5. Bi-level blade (1) according to anyone of the claims 1-4, **characterized in that** said central cutting edge (21), said median cutting edge (41) and said upper cutting edge (61) are along a first frontal axis (L1).

6. Bi-level blade (1) according to anyone of the claims 1-5, **characterized in that** said upper cutting edge (61) is inclined by a fifth angle (ε) with respect to the longitudinal axis (L), said third angle (ε) is comprised between -40 and 20 sexagesimal degrees measured on the horizontal geometric plane (H).

7. Bi-level blade (1) according to anyone of the claims 1-6, **characterized in that** said lower cutting edge (71) is inclined by a third angle (γ) with respect to the longitudinal axis (L), said third angle (γ) is comprised between -40 and 20 sexagesimal degrees measured on the horizontal geometric plane (H).

8. Bi-level blade (1) according to anyone of the claims 1-7, **characterized in that** said longitudinal length (100) is that said outward end (65) of the upper cutting edge (61) is on a same cutting circumference (C) of said outward end (75) of the lower cutting edge (71), wherein said cutting circumference (C) has a geometric ray equal to the distance between the center (10) of the central portion (2) and the two outward ends (65) and (75) respectively one (65) of the upper cutting edge (61) and one (75) of the lower cutting edge (71).

9. Bi-level blade (1) according to anyone of the claims 1-8, **characterized in that** said central portion (2) is flat and entirely lies on the horizontal geometric plane (H), that said upper outward portion (6) entirely lies for the entire longitudinal length on the upper horizontal geometric plane (S) and that said lower outward portion (7) entirely lies for the entire longitudinal length on the lower horizontal geometric plane (J).

10. Bi-level blade (1) according to anyone of the claims 1-9, **characterized in that** the central portion (2) comprises a central rear edge (28) facing to the rear of the direction of rotation (R),
said central rear edge (28) comprises an inward end (12) and an outward end (14), said inward end (12) of the central rear edge (28) is located on the rear of the center (10) of the central portion (2), said outward end (14) of the central rear edge (28) is in contact with a median rear edge (48) of the rear median portion (4) which is in contact with an outward rear edge (78) of the lower outward portion (7), said outward rear edge (78) comprises a rear outward end (17) which is in contact with said rear outward portion (72) of said lower outward portion (7),
that said central rear edge (28), said median rear edge (48) and said outward rear edge (78) identify a rear edge (8) of the bi-level blade (1), said rear edge (8) is bent from the rear towards the front in direction along the transversal axis (T) and from inward towards the outward along the direction of the longitudinal axis (L) as that a second transverse distance (202) measured on the transversal axis (T) between the center (10) of the central portion (2) and the inward end (12) of the central rear edge (28) is longer than a third transverse distance (203) measured on the transversal axis (T) between the longitudinal axis (L) and the rear outward end (17) of the outward rear edge (78).

11. Bi-level blade (1) according to anyone of the claims 1-10, **characterized in that** said rear outward portion (72) of said lower outward portion (7) comprises an outward edge (700) facing to the outward, said outward edge (700) goes from the upper end (77) to the outward end (75) of the rear outward portion (72) and comprises at least one point (79) whose geometric intersection is projected on the longitudinal axis (L), between the outward end (75) and the point (79) of the outward edge (700) is identified an edge axis (W) which follows a profile of the outward edge (700), said edge axis (W) is inclined with respect to the transversal axis (T) of a fourth angle (δ), said fourth angle (δ) is comprised between -10 and +10 sexagesimal degrees measured on the horizontal geometric plane (H).

12. Bi-level blade (1) according to anyone of the claims 1-11, **characterized in that** comprises ribs (9) increasing a thickness (304) of the bi-level blade (1), said thickness (304) measured along the vertical axis (V), said ribs (9) increase the thickness (304) of at least one of a portion of a list comprising the frontal median portion (3), the rear median portion (4), at least one portion facing inwards to the upper outward portion (6) and at least one portion facing inwards to the lower outward portion (7).

13. Bi-level blade (1) according to anyone of the claims 1-12, **characterized in that** the central portion (2) comprises a central hole (101) in correspondence with the center (10) and at least one second through hole (11), said central hole (101) being adapted to be engaged by at least three lower extensions (59) of a hub (5), said at least one second through hole (11) being adapted to see through from below a tooth (52) of the hub (5), said hub (5) mounting said bi-level blade (1) along the motor axis (M) with the lawnmower.

14. Bi-level blade (1) according to the claim 13, **characterized in that** said hub (5) comprises at least three counterfort (55) located at 120° between each other, each counterfort (55) comprising a base portion (53) in contact with a basis (50) of the hub (5) and an axial portion (54) in contact with a shaft (56) of the hub (5), in correspondence with said counterfort (55) are placed said teeth (52).

15. Bi-level blade (1) according to anyone of the claims 13 o 14, **characterized in that** said central hole (101) comprises at least three grooves (111) adapted to be engaged by said at least three lower extensions (59) of said hub (5).

## Patentansprüche

1. Zweistufen-Messer (1) eines Rasenmähers, mit einem zentralen Bereich (2), der auf einer ersten horizontalen geometrischen Ebene (H) liegt, wobei ein Zentrum (10) des zentralen Bereichs (2) durch Längskeilverbindung auf einer vertikalen Motorachse (M) festgelegt ist, die eine Rotationsrichtung (R) des Zweistufen-Messers (1) definiert, wobei die Rotationsrichtung (R) auf der ersten horizontalen geometrischen Ebene (H) liegt, wobei sich das Zweistufen-Messer (1) von dem Zentrum (10) des zentralen Bereichs (2) über eine Längserstreckungslänge entlang einer Längsachse (L) nach außen erstreckt, wobei die Längsachse (L) senkrecht zu der Rotationsrichtung (R) ist und auf der ersten horizontalen geometrischen Ebene (H) liegt, wobei sich ein oberer äußerer Bereich (6) und ein unterer äußerer Bereich (7) des Zweistufen-Messers (1) von dem zentralen Bereich (2) in beiden Richtungen entlang der Längsachse (L) nach außen erstrecken,
wobei der obere äußere Bereich (6) eine obere Schneidkante (61) aufweist, die einer Vorderseite der Rotationsrichtung (R) zugewandt ist, wobei die obere Schneidkante (61) ein äußeres Ende (65) aufweist, wobei wenigstens das äußere Ende (65) auf einer oberen horizontalen geometrischen Ebene (S) liegt, die um einen ersten vertikalen Abstand (301) gegenüber der ersten horizontalen geometrischen Ebene (H) höher liegt, wobei der erste vertikale Abstand (301) entlang einer vertikalen Achse (V) gemessen wird, die parallel zu der vertikalen Motorachse (M) ist, wobei die obere Schneidkante (61) dazu ausgebildet ist, einen oberen Bereich eines Grashalms abzuschneiden, wobei der untere äußere Bereich (7) eine untere Schneidkante (71) aufweist, die der Vorderseite der Rotationsrichtung (R) zugewandt ist, wobei die untere Schneidkante (71) ein äußeres Ende (75) aufweist, wobei wenigstens das äußere Ende (75) auf einer unteren horizontalen geometrischen Ebene (J) liegt, die um einen zweiten vertikalen Abstand (302) gegenüber der ersten horizontalen geometrischen Ebene (H) tiefer liegt, wobei der zweite vertikale Abstand (302) entlang der vertikalen Achse (V) gemessen wird, wobei die untere Schneidkante (71) dazu ausgebildet ist, einen unteren Bereich eines Grashalms abzuschneiden, wobei die untere Schneidkante (71) um einen Querabstand (200) gegenüber der oberen Schneidkante (61) zurückgesetzt ist, wobei der Querabstand (200) entlang einer Querachse (T) gemessen wird, wobei die Querachse (T) auf der ersten horizontalen geometrischen Ebene (H) liegt und senkrecht zu der Längsachse (L) ist,
wobei ein vertikaler Trennungsabstand (300) zwischen dem äußeren Ende (65) der oberen Schneidkante (61) und dem äußeren Ende (75) der unteren Schneidkante (71) die Summe aus dem ersten vertikalen Abstand (301) und dem zweiten vertikalen Abstand (302) ist, wobei der vertikale Trennungsabstand (300) eine Öffnung (30) zwischen dem oberen äußeren Bereich (6) und dem unteren äußeren Bereich (7) definiert, wobei die Öffnung (30) dazu ausgebildet ist, eine Luftströmung (F) hindurch zu lassen, die von der Vorderseite der Rotationsrichtung (R) kommt,
wobei der untere äußere Bereich (7) einen hinteren äußeren Bereich (72) aufweist, der in Richtung der Querachse (T) zur Rückseite der Rotationsrichtung (R) weist, wobei der hintere äußere Bereich (72) in Richtung der vertikalen Achse (V) nach oben gekrümmt ist, so dass er einen Teil der Luftströmung (F) nach oben in Richtung der vertikalen Achse (V) führen kann, wobei ein oberes Ende (77) des hinteren äußeren Bereichs (72) um einen dritten vertikalen Abstand (303) über der oberen horizontalen geometrischen Ebene (S) erhöht angeordnet ist,
wobei der obere äußere Bereich (6) einen hinteren äußeren Bereich (62) aufweist, der in Richtung der Querachse (T) zur Rückseite der Rotationsrichtung (R) weist, wobei der hintere äußere Bereich (62) eine Querlänge des oberen äußeren Bereichs (6) verringert,
wobei der obere äußere Bereich (6) um eine Längserstreckungslänge (100) gegenüber dem unteren äußeren Bereich (7) kürzer ist, wobei die Längserstreckungslänge (100) entlang der Längsachse (L) zwischen dem äußeren Ende (65) der oberen Schneidkante (61) und dem äußeren Ende (75) der unteren Schneidkante (71) gemessen wird,
wobei eine erste Achse zwischen dem Zentrum (10) des zentralen Bereichs (2) und dem äußeren Ende (65) der oberen Schneidkante (61) in einem ersten Winkel (α) in Bezug auf die Längsachse (L) geneigt ist, so dass die obere Schneidkante (61) in Bezug auf die Längsachse (L) achsenversetzt ist, wobei eine zweite Achse zwischen dem Zentrum (10) des zentralen Bereichs (2) und dem äußeren Ende (75) der unteren Schneidkante (71) in einem zweiten Winkel (β) in Bezug auf die Längsachse (L) geneigt ist, so dass die untere Schneidkante (71) in Bezug auf die Längsachse (L) achsenversetzt ist,
wobei das Zweistufen-Messer (1) einstückig ausgebildet ist,
wobei sich das äußere Ende (75) der unteren Schneidkante (71) des unteren äußeren Bereichs (7) über eine zweite Querlänge (201) von der Längsachse (L) in Richtung der Querachse (T) zur Vorderseite der Rotationsrichtung (R) erstreckt,
wobei sich die obere Schneidkante (61) des oberen äußeren Bereichs (6) entlang der Längsachse (L) in Richtung nach innen zu dem Zweistufen-Messer (1) über die gesamte Längserstreckungslänge des oberen äußeren Bereichs (6) erstreckt,
wobei der zentrale Bereich (2) eine zentrale Schneidkante (21) aufweist, die der Vorderseite der Rotationsrichtung (R) zugewandt ist, wobei die zentrale Schneidkante (21) ein inneres Ende (20) und ein äußeres Ende (23) aufweist, die auf der ersten horizontalen geometrischen Ebene (H) liegen, wobei sich das innere Ende (20) der zentralen Schneidkante (21) an der Vorderseite des Zentrums (10) des zentralen Bereichs (2) befindet,
wobei ein frontaler mittlerer Bereich (3) des Zweistufen-Messers (1), der den zentralen Bereich (2) und den oberen äußeren Bereich (6) miteinander verbindet, eine obere mittlere Schneidkante (31) aufweist, die der Vorderseite der Rotationsrichtung (R) zugewandt ist, wobei die obere mittlere Schneidkante (31) ein inneres Ende (32) und ein äußeres Ende (36) aufweist, wobei das innere Ende (32) in Kontakt mit dem äußeren Ende (23) der zentralen Schneidkante (21) steht, wobei das innere Ende (32) der oberen mittleren Schneidkante (31) auf der horizontalen geometrischen Ebene (H) liegt, wobei das äußere Ende (36) der oberen mittleren Schneidkante (31) in Kontakt mit einem inneren Ende (63) der oberen Schneidkante (61) steht.

2. Zweistufen-Messer (1) nach Anspruch 1,
**dadurch gekennzeichnet, dass** sich die untere Schneidkante (71) des unteren äußeren Bereichs (7) entlang der Längsachse (L) in Richtung nach innen zu dem Zweistufen-Messer (1) über die gesamte Längserstreckungslänge des unteren äußeren Bereichs (7) erstreckt,
dass ein hinterer mittlerer Bereich (4) des Zweistufen-Messers (1), der den zentralen Bereich (2) und den unteren äußeren Bereich (7) miteinander verbindet, eine untere mittlere Schneidkante (41) aufweist, die der Vorderseite der Rotationsrichtung (R) zugewandt ist, wobei die untere mittlere Schneidkante (41) ein inneres Ende (42) und ein äußeres Ende (47) aufweist, wobei das äußere Ende (47) der unteren mittleren Schneidkante (41) mit einem inneren Ende (74) der unteren Schneidkante (71) in Kontakt steht.

3. Zweistufen-Messer (1) nach einem der Ansprüche 1 oder 2,
**dadurch gekennzeichnet, dass** der erste Winkel (α) zwischen 5 und 60 Sexagesimalgrad liegt und dass der zweite Winkel (β) zwischen 1 und 50 Sexagesimalgrad liegt, gemessen auf der horizontalen geometrischen Ebene (H).

4. Zweistufen-Messer (1) nach einem der Ansprüche 1 bis 3,
**dadurch gekennzeichnet, dass** der vertikale Trennungsabstand (300) zwischen dem äußeren Ende (65) der oberen Schneidkante (61) und dem äußeren Ende (75) der unteren Schneidkante (71) zwischen 13 und 30 mm beträgt.

5. Zweistufen-Messer (1) nach einem der Ansprüche 1 bis 4,
**dadurch gekennzeichnet, dass** die zentrale Schneidkante (21), die mittlere Schneidkante (41) und die obere Schneidkante (61) entlang einer ersten frontalen Achse (L1) angeordnet sind.

6. Zweistufen-Messer (1) nach einem der Ansprüche 1 bis 5,
**dadurch gekennzeichnet, dass** die obere Schneidkante (61) in einem fünften Winkel (ε) in Bezug auf die Längsachse (L) geneigt ist, wobei der dritte Winkel zwischen -40 und 20 Sexagesimalgrad gemessen auf der horizontalen geometrischen Ebene (H) liegt.

7. Zweistufen-Messer (1) nach einem der Ansprüche 1 bis 6,
**dadurch gekennzeichnet, dass** die untere Schneidkante (71) in einem dritten Winkel (γ) in Bezug auf die Längsachse (L) geneigt ist, wobei der dritte Winkel (γ) zwischen -40 und 20 Sexagesimalgrad gemessen auf der horizontalen geometrischen Ebene (H) liegt.

8. Zweistufen-Messer (1) nach einem der Ansprüche 1 bis 7,
**dadurch gekennzeichnet, dass** die Längserstreckungslänge (100) derart ist, dass das äußere Ende (65) der oberen Schneidkante (61) sich auf demselben Schneidumfang (C) des äußeren Endes (75) der unteren Schneidkante (71) befindet, wobei der Schneidumfang (C) einen geometrischen Radius aufweist, der gleich dem Abstand zwischen dem Zentrum (10) des zentralen Bereichs (2) und den beiden äußeren Enden (65) und (75) bzw. dem einen äußeren Ende (65) der oberen Schneidkante (61) und dem einen äußeren Ende (75) der unteren Schneidkante (71) ist.

9. Zweistufen-Messer (1) nach einem der Ansprüche 1 bis 8,
**dadurch gekennzeichnet, dass** der zentrale Bereich (2) flach ist und vollständig auf der horizontalen geometrischen Ebene (H) liegt, dass der obere äußere Bereich (6) über die gesamte Längserstreckungslänge vollständig auf der oberen horizontalen geometrischen Ebene (S) liegt, und dass der untere äußere Bereich (7) über die gesamte Längserstreckungslänge vollständig auf der unteren horizontalen geometrischen Ebene (J) liegt.

10. Zweistufen-Messer (1) nach einem der Ansprüche 1 bis 9,
**dadurch gekennzeichnet, dass** der zentrale Bereich (2) eine zentrale hintere Kante (28) aufweist, die der Rückseite der Rotationsrichtung (R) zugewandt ist,
dass die zentrale hintere Kante (28) ein inneres Ende (12) und ein äußeres Ende (14) aufweist, wobei das innere Ende (12) der zentralen hinteren Kante (28) auf der Rückseite des Zentrums (10) des zentralen Bereichs (2) angeordnet ist, wobei das äußere Ende (14) der zentralen hinteren Kante (28) mit einer mittleren hinteren Kante (48) des hinteren mittleren Bereichs (4) in Kontakt steht, die mit einer äußeren hinteren Kante (78) des unteren äußeren Bereichs (7) in Kontakt steht, wobei die äußere hintere Kante (78) ein hinteres äußeres Ende (17) aufweist, das mit dem hinteren äußeren Bereich (72) des unteren äußeren Bereichs (7) in Kontakt steht,
dass die zentrale hintere Kante (28), die mittlere hintere Kante (48) und die äußere hintere Kante (78) eine hintere Kante (8) des Zweistufen-Messers (1) definieren, wobei die hintere Kante (8) von hinten nach vorne in Richtung entlang der Querachse (T) gebogen ist und von innen nach außen entlang der Richtung der Längsachse (L) gebogen ist, so dass ein zweiter Querabstand (202) gemessen an der Querachse (T) zwischen dem Zentrum (10) des zentralen Bereichs (2) und dem inneren Ende (12) der zentralen hinteren Kante (28) länger ist als ein dritter Querabstand (203) gemessen an der Querachse (T) zwischen der Längsachse (L) und dem hinteren äußeren Ende (17) der äußeren hinteren Kante (78).

11. Zweistufen-Messer (1) nach einem der Ansprüche 1 bis 10,
**dadurch gekennzeichnet, dass** der hintere äußere Bereich (72) des unteren äußeren Bereichs (7) eine nach außen weisende äußere Kante (700) aufweist, wobei sich die äußere Kante (700) von dem oberen Ende (77) zu dem äußeren Ende (75) des hinteren äußeren Bereichs (72) erstreckt und wenigstens einen Punkt (79) aufweist, dessen geometrischer Schnittpunkt auf die Längsachse (L) projiziert wird, wobei zwischen dem äußeren Ende (75) und dem Punkt (79) der äußeren Kante (700) eine Kantenachse (W) definiert ist, die einem Profil der äußeren Kante (700) folgt, wobei die Kantenachse (W) in Bezug auf die Querachse (T) in einem vierten Winkel (δ) geneigt ist, wobei der vierte Winkel (δ) zwischen -10 und +10 Sexagesimalgrad gemessen auf der horizontalen geometrischen Ebene (H) liegt.

12. Zweistufen-Messer (1) nach einem der Ansprüche 1 bis 11,
**dadurch gekennzeichnet, dass** es Rippen (9) aufweist, die eine Dicke (304) des Zweistufen-Messers (1) vergrößern, wobei die Dicke (304) entlang der vertikalen Achse (V) gemessen wird, wobei die Rippen (9) die Dicke (304) von wenigstens einem von einem Bereich einer Liste erhöhen, die den vorderen mittleren Bereich (3) und den hinteren mittleren Bereich (4) beinhaltet, wobei wenigstens ein Bereich nach innen zu dem oberen äußeren Bereich (6) weist und wenigstens ein Bereich nach innen zu dem unteren äußeren Bereich (7) weist.

13. Zweistufen-Messer (1) nach einem der Ansprüche 1 bis 12,
**dadurch gekennzeichnet, dass** der zentrale Bereich (2) eine zentrale Öffnung (101) entsprechend dem Zentrum (10) sowie wenigstens eine zweite Durchgangsöffnung (11) aufweist, wobei die zentrale Öffnung (101) dazu ausgelegt ist, mit wenigstens drei unteren Verlängerungen (59) einer Nabe (5) zusammenzuwirken, wobei die wenigstens eine zweite Durchgangsöffnung (11) derart ausgebildet ist, dass von unterhalb ein Zahn (52) der Nabe (5) sichtbar ist, wobei an der Nabe (5) das Zweistufen-Messer (1) entlang der Motorachse (M) an dem Rasenmäher angebracht ist.

14. Zweistufen-Messer (1) nach Anspruch 13,
**dadurch gekennzeichnet, dass** die Nabe (5) wenigstens drei Gegenlager (55) aufweist, die in einem Abstand von 120° zwischen einander angeordnet sind, wobei jedes Gegenlager (55) einen Basisbereich (53) in Kontakt mit einer Basis (50) der Nabe (5) und einen axialen Bereich (54) in Kontakt mit einer Welle (56) der Nabe (5) aufweist, wobei die Zähne (52) in Übereinstimmung mit dem Gegenlager (55) angeordnet sind.

15. Zweistufen-Messer (1) nach einem der Ansprüche 13 oder 14,
**dadurch gekennzeichnet, dass** die zentrale Öffnung (101) wenigstens drei Nuten (111) aufweist, die dazu ausgebildet sind, mit den wenigstens drei unteren Verlängerungen (59) der Nabe (5) zusammenzuwirken.

## Revendications

1. Lame à deux niveaux (1) d'une tondeuse à gazon comprenant une partie centrale (2) placée sur un premier plan géométrique horizontal (H), un centre (10) de la partie centrale (2) est claveté sur un axe de moteur vertical (M) qui identifie une direction de rotation (R) de la lame à deux niveaux (1), ladite direction de rotation (R) est placée sur ledit premier plan géométrique horizontal (H), ladite lame à deux niveaux (1) s'étend sur une longueur longitudinale à partir du centre (10) de la partie centrale (2) s'étendant vers l'extérieur le long d'un axe longitudinal (L), ledit axe longitudinal (L) est perpendiculaire à la direction de rotation (R) et est placé sur le premier plan géométrique horizontal (H), à partir de la partie centrale (2) vers deux directions vers l'extérieur le long de l'axe longitudinal (L), s'étendant une partie externe supérieure (6) et une partie externe inférieure (7) de la lame à deux niveaux (1),
ladite partie externe supérieure (6) comprend un bord coupant supérieur (61) faisant face à une partie avant de la direction de rotation (R), ledit bord coupant supérieur (61) comprend une extrémité externe (65), au moins ladite extrémité externe (65) se trouve sur un plan géométrique horizontal supérieur (S) qui est plus haut selon une première distance verticale (301) par rapport audit premier plan géométrique horizontal (H), ladite première distance verticale (301) est mesurée le long d'un axe vertical (V) qui est parallèle à l'axe de moteur vertical (M), ledit bord coupant supérieur (61) est adapté pour couper une partie supérieure d'un brin d'herbe,
ladite partie externe inférieure (7) comprend un bord coupant inférieur (71) faisant face à la partie avant de la direction de rotation (R), ledit bord coupant inférieur (71) comprend une extrémité externe (75), au moins ladite extrémité externe (75) se trouve sur un plan géométrique horizontal inférieur (J) qui est plus bas selon une deuxième distance verticale (302) par rapport audit premier plan géométrique horizontal (H), ladite deuxième distance verticale (302) est mesurée le long de l'axe vertical (V), ledit bord coupant inférieur (71) est adapté pour couper une partie inférieure d'un brin d'herbe, ledit bord coupant inférieur (71) est en retrait selon une distance transversale (200) par rapport audit bord coupant supérieur (61), dans laquelle ladite distance transversale (200) est mesurée le long d'un axe transversal (T), ledit axe transversal (T) se trouvant sur le premier plan géométrique horizontal (H) et il est perpendiculaire à l'axe longitudinal (L),
une distance verticale de séparation (300) entre l'extrémité externe (65) du bord coupant supérieur (61) et l'extrémité externe (75) du bord coupant inférieur (71) est la somme de la première distance verticale (301) et de la deuxième distance verticale (302), ladite distance verticale de séparation (300) identifie une ouverture (30) entre la partie externe supérieure (6) et la partie externe inférieure (7), ladite ouverture (30) est adaptée pour permettre à un écoulement d'air (F) venant de la partie avant de la direction de rotation (R) de passer à travers,
ladite partie externe inférieure (7) comprend une partie externe arrière (72) faisant face à l'arrière de la direction de rotation (R) dans la direction de l'axe transversal (T), ladite partie externe arrière (72) est pliée vers le haut dans la direction de l'axe vertical (V) afin d'être adaptée pour diriger une partie de l'écoulement d'air (F) vers le haut dans la direction de l'axe vertical (V), une extrémité supérieure (77) de la partie externe arrière (72) est élevée selon une troisième distance verticale (303) au-dessus du plan géométrique horizontal supérieur (S),
ladite partie externe supérieure (6) comprend une partie externe arrière (62) faisant face à l'arrière de la direction de rotation (R) dans la direction de l'axe transversal (T), ladite partie externe arrière (62) réduit une longueur transversale de la partie externe supérieure (6),
ladite partie externe supérieure (6) est plus courte selon une longueur longitudinale (100) par rapport à ladite partie externe inférieure (7), ladite longueur longitudinale (100) est mesurée le long de l'axe longitudinal (L) entre ladite extrémité externe (65) du bord coupant supérieur (61) et ladite extrémité externe (75) du bord coupant inférieur (71),
un premier axe entre le centre (10) de la partie centrale (2) et l'extrémité externe (65) du bord coupant supérieur (61) est incliné selon un premier angle (α) par rapport à l'axe longitudinal (L) tel que le bord coupant supérieur (61) est désaxé par rapport à l'axe longitudinal (L),
un second axe entre le centre (10) de la partie centrale (2) et l'extrémité externe (75) du bord coupant inférieur (71) est incliné selon un deuxième angle (β) par rapport à l'axe longitudinal (L) tel que le bord coupant inférieur (71) est désaxé par rapport à l'axe longitudinal (L),
ladite lame à deux niveaux (1) est d'un seul tenant, ladite extrémité externe (75) du bord coupant inférieur (71) de la partie externe inférieure (7) s'étend selon une seconde longueur transversale (201), de l'axe longitudinal (L) vers l'avant de la direction de rotation (R) dans la direction de l'axe transversal (T),
ledit bord coupant supérieur (61) de la partie externe supérieure (6) s'étend le long de l'axe longitudinal (L) dans la direction vers l'intérieur par rapport à la lame à deux niveaux (1) sur toute la longueur longitudinale de la partie externe supérieure (6),
ladite partie centrale (2) comprend un bord coupant central (21) faisant face à l'avant de la direction de rotation (R), ledit bord coupant central (21) comprend une extrémité interne (20) et une extrémité externe (23) se trouvant sur le premier plan géométrique horizontal (H), ladite extrémité interne (20) du bord coupant central (21) est positionnée à l'avant du centre (10) de la partie centrale (2),
une partie médiane frontale (3) de la lame à deux niveaux (1) qui relie la partie centrale (2) et la partie externe supérieure (6), comprend :
un bord coupant médian supérieur (31) faisant face à l'avant de la direction de rotation (R), ledit bord coupant médian supérieur (31) comprend une extrémité interne (32) et une extrémité externe (36), ladite extrémité interne (32) est en contact avec ladite extrémité externe (23) du bord coupant central (21), ladite extrémité interne (32) du bord coupant médian supérieur (31) se trouve sur le plan géométrique horizontal (H), ladite extrémité externe (36) du bord coupant médian supérieur (31) est en contact avec une extrémité interne (63) du bord coupant supérieur (61).

2. Lame à deux niveaux (1) selon la revendication 1, **caractérisée en ce que** ledit bord coupant inférieur (71) de la partie externe inférieure (7) s'étendant le long de l'axe longitudinal (L) dans la direction vers l'intérieur, vers la lame à deux niveaux (1) sur toute la longueur longitudinale inférieure (7),
**en ce qu'**une partie médiane arrière (4) de la lame à deux niveaux (1) qui relie la partie centrale (2) et la partie externe inférieure (7), comprend un bord coupant médian inférieur (41) faisant face à l'avant de la direction de rotation (R), ledit bord coupant médian inférieur (41) comprend une extrémité interne (42) et une extrémité externe (47), ladite extrémité externe (47) du bord coupant médian inférieur (41) est en contact avec une extrémité interne (74) du bord coupant inférieur (71).

3. Lame à deux niveaux (1) selon l'une quelconque des revendications 1 ou 2, **caractérisée en ce que** le premier angle (α) est compris entre 5 et 60 degrés sexagésimaux et **en ce que** le deuxième angle (β) est compris entre 1 et 50 degrés sexagésimaux mesurés sur le plan géométrique horizontal (H).

4. Lame à deux niveaux (1) selon l'une quelconque des revendications 1 à 3, **caractérisée en ce que** ladite distance verticale de séparation (300) entre l'extrémité externe (65) du bord coupant supérieur (61) et l'extrémité externe (75) du bord coupant inférieur (71) est comprise entre 13 et 30 mm.

5. Lame à deux niveaux (1) selon l'une quelconque des revendications 1 à 4, **caractérisée en ce que** ledit bord coupant central (21), ledit bord coupant médian (41) et ledit bord coupant supérieur (61) sont le long d'un premier axe frontal (L1).

6. Lame à deux niveaux (1) selon l'une quelconque des revendications 1 à 5, **caractérisée en ce que** ledit bord coupant supérieur (61) est incliné selon un cinquième angle (ε) par rapport à l'axe longitudinal (L), ledit troisième angle (ε) est compris entre -40 et 20 degrés sexagésimaux mesurés sur le plan géométrique horizontal (H).

7. Lame à deux niveaux (1) selon l'une quelconque des revendications 1 à 6, **caractérisée en ce que** ledit bord coupant inférieur (71) est incliné selon un troisième angle (γ) par rapport à l'axe longitudinal (L), ledit troisième angle (γ) est compris entre -40 et 20 degrés sexagésimaux mesurés sur le plan géométrique horizontal (H).

8. Lame à deux niveaux (1) selon l'une quelconque des revendications 1 à 7, **caractérisée en ce que** ladite longueur longitudinale (100) est telle que ladite extrémité externe (65) du bord coupant supérieur (61) est sur une même circonférence de coupe (C) de ladite extrémité externe (75) du bord coupant inférieur (71), dans lequel ladite circonférence de coupe (C) a un rayon géométrique égal à la distance entre le centre (10) de la partie centrale (2) et les deux extrémités externes (65) et (75) respectivement celle (65) du bord coupant supérieur (61) et celle (75) du bord coupant inférieur (71).

9. Lame à deux niveaux (1) selon l'une quelconque des revendications 1 à 8, **caractérisée en ce que** ladite partie centrale (2) est plate et se trouve complètement sur le plan géométrique horizontal (H), **en ce que** ladite partie externe supérieure (6) est complètement, sur toute la longueur longitudinale, sur le plan géométrique horizontal supérieur (S) et **en ce que** ladite partie externe inférieure (7) est complètement, sur toute la longueur longitudinale, sur le plan géométrique horizontal inférieur (J).

10. Lame à deux niveaux (1) selon l'une quelconque des revendications 1 à 9, **caractérisée en ce que** la partie centrale (2) comprend un bord arrière central (28) faisant face à l'arrière de la direction de rotation (R),
ledit bord arrière central (28) comprend une extrémité interne (12) et une extrémité externe (14), ladite extrémité interne (12) du bord arrière central (28) est positionnée sur l'arrière du centre (10) de la partie centrale (2), ladite extrémité externe (14) du bord arrière central (28) est en contact avec un bord arrière médian (48) de la partie médiane arrière (4) qui est en contact avec un bord arrière externe (78) de la partie externe inférieure (7), ledit bord arrière externe (78) comprend une extrémité externe arrière (17) qui est en contact avec ladite partie externe arrière (72) de ladite partie externe inférieure (7),
**en ce que** ledit bord arrière central (28), ledit bord arrière médian (48) et ledit bord arrière externe (78) identifient un bord arrière (8) de la lame à deux niveaux (1), ledit bord arrière (8) est plié de l'arrière vers l'avant dans la direction le long de l'axe transversal (T) et de l'intérieur vers l'extérieur le long de la direction de l'axe longitudinal (L) de sorte qu'une deuxième distance transversale (202) mesurée sur l'axe transversal (T) entre le centre (10) de la partie centrale (2) et l'extrémité interne (12) du bord arrière central (28) est plus longue qu'une troisième distance transversale (203) mesurée sur l'axe transversal (T) entre l'axe longitudinal (L) et l'extrémité externe arrière (17) du bord arrière externe (78).

11. Lame à deux niveaux (1) selon l'une quelconque des revendications 1 à 10, **caractérisée en ce que** ladite partie externe arrière (72) de ladite partie externe inférieure (7) comprend un bord externe (700) orienté vers l'extérieur, ledit bord externe (700) va de l'extrémité supérieure (77) à l'extrémité externe (75) de la partie externe arrière (72) et comprend au moins un point (79) dont l'intersection géométrique fait saillie sur l'axe longitudinal (L), entre l'extrémité externe (75) et le point (79) du bord externe (700), on identifie un axe de bord (W) qui suit un profil du bord externe (700), ledit axe de bord (W) est incliné par rapport à l'axe transversal (T) d'un quatrième angle (δ), ledit quatrième angle (δ) est compris entre -10 et +10 degrés sexagésimaux mesurés sur le plan géométrique horizontal (H).

12. Lame à deux niveaux (1) selon l'une quelconque des revendications 1 à 11, **caractérisée en ce qu'**elle comprend des nervures (9) augmentant une épaisseur (304) de la lame à deux niveaux (1), ladite épaisseur (304) étant mesurée le long de l'axe vertical (V), lesdites nervures (9) augmentent l'épaisseur (304) d'au moins l'une parmi une partie d'une liste comprenant la partie médiane frontale (3), la partie médiane arrière (4), au moins une partie orientée vers l'intérieur vers la partie externe supérieure (6) et au moins une partie orientée vers l'intérieur vers la partie externe inférieure (7).

13. Lame à deux niveaux (1) selon l'une quelconque des revendications 1 à 12, **caractérisée en ce que** la partie centrale (2) comprend un trou central (101) en correspondance avec le centre (10) et au moins un second trou débouchant (11), ledit trou central (101) étant adapté pour être mis en prise par au moins trois extensions inférieures (59) d'un moyeu (5), ledit au moins un second trou débouchant (11) étant adapté pour voir à travers depuis le dessous d'une dent (52) du moyeu (5), ledit moyeu (5) permettant de monter ladite lame à deux niveaux (1) le long de l'axe de moteur (M) avec la tondeuse à gazon.

14. Lame à deux niveaux (1) selon la revendication 13, **caractérisée en ce que** ledit moyeu (5) comprend au moins trois contreforts (55) positionnés avec 120° entre eux, chaque contrefort (55) comprenant une partie de base (53) en contact avec une base (50) du moyeu (5) et une partie axiale (54) en contact avec un arbre (56) du moyeu (5), en correspondance avec ledit contrefort (55), on place lesdites dents (52).

15. Lame à deux niveaux (1) selon l'une quelconque des revendications 13 ou 14, **caractérisée en ce que** ledit trou central (101) comprend au mois trois rainures (111) adaptées pour être mises en prise par lesdites au moins trois extensions inférieures (59) dudit moyeu (5).
